Europäisches Patentamt

European Patent Office

Office européen des brevets

(19)

(11) Publication number: **0 201 902**
**B1**

(12) **EUROPEAN PATENT SPECIFICATION**

(45) Date of publication of patent specification: **31.01.90**

(51) Int. Cl.⁵: **G 05 B 19/405**

(21) Application number: **86106430.1**

(22) Date of filing: **12.05.86**

(54) **Sewing machine with reference speed correction by dimensional ratio between motor- and armshaft-pulleys.**

(30) Priority: **13.05.85 JP 100707/85**
**13.05.85 JP 100708/85**
**13.05.85 JP 100709/85**
**13.05.85 JP 100710/85**
**13.05.85 JP 100711/85**

(43) Date of publication of application:
**20.11.86 Bulletin 86/47**

(45) Publication of the grant of the patent:
**31.01.90 Bulletin 90/05**

(84) Designated Contracting States:
**DE FR GB**

(56) References cited:
EP-A-0 091 084
DE-A-3 306 555
US-A-3 976 861
US-A-4 473 020
MICROPROCESSORS AND MICROSYSTEMS,
vol. 5, no. 8, October 1981, pages 351-356,
Whitstable, Kent, GB; KATSUHIRO FUJIKAWA:
"Microcomputer control for an industrial sewing
machine"

(73) Proprietor: **Matsushita Electric Industrial Co.,
Ltd.**
**1006, Oaza Kadoma**
**Kadoma-shi Osaka-fu, 571 (JP)**

(72) Inventor: **Neki, Shigeo**
**2-1-312, Taishibashi 3-chome**
**Asahi-ku Osaka-shi Osaka (JP)**
Inventor: **Ohara, Kenichi**
**18-8, Deguchi 4-chome**
**Hirakata-shi Osaka (JP)**
Inventor: **Shibata, Nobuho**
**12-6, Myokenzaka 5-chome**
**Katano-shi Osaka (JP)**
Inventor: **Dohi, Takashi**
**20-14-410, Higashi Nakafuri 1-chome**
**Hirakata-shi Osaka (JP)**

(74) Representative: **Grupe, Peter, Dipl.-Ing. et al
Patentanwaltsbüro Tiedtke-Bühling-Kinne-
Grupe-Pellmann-Grams-Struif Bavariaring 4
D-8000 München 2 (DE)**

(56) References cited:
BROWN BOVERI REVIEW, vol. 72, no. 4, April
1985, pages 199-204, Baden, CH; D. KEMPFF:
"Electronic spindle positioning - a modern
solution to a machine tool problem"

## Description

The invention relates to a sewing machine according to the preamble of claim 1.

Especially the present invention is related to a prior art as it is known from EP 0 091 084 A1. There is disclosed a sewing machine which comprises a manually operated pedal for controlling the speed of a motor which is driving an armshaft of the sewing machine by means of a belt coupling a pulley with an armshaft pulley.

In order to establish a constant speed of the armshaft there furthermore is provided a speed control means responsive to the speed related pulses generally by a tachogenerator — which are indicatives of the actual speed of the motor — and further responsive to the multiplied reference speed value indicated by the amount of depression of the pedal, wherein the speed of the motor is controlled in accordance with a difference between these two values.

As the needle coupled to the armshaft of the sewing machine should be stopped always at the top dead point thereof, there is additionally provided an angular position detector which is generating a position pulse whenever the needle has reached the aforementioned top dead point. A central processing unit, consequently, is able to stop the motor at the correct moment by monitoring these pulses.

In US—A 4 473 020 there is disclosed a further sewing machine of the aforementioned type which also is comprising a speed control means based on the pulses of a tachogenerator. The needle position detector of this known sewing machine is used to establish a so called "soft start" of the motor.

In the article "Microcomputer control for an industrial sewing machine" there is disclosed a sewing machine where the motor speed is controlled by a tachogenerator with the reference value indicated via a manually operated pedal.

The speed of rotation of the armshaft of the sewing machines disclosed in the aforementioned documents depends on the ratio between the diameter of the motor pulley and that of the armshaft pulley. Because of that it is necessary to calibrate the armshaft speed by selecting an armshaft pulley having the correct diameter. As, however, these pulleys vary from machine to machine, the required calibration for each sewing machine is time consuming, which is an obstacle in mass production. A further disadvantage of these known sewing machines lies therein that the belt which is due to be subjected to slippage, especially when being used for a longer period of time. As a consequence, the armshaft speed will not correspond to the speed indicated by the manually operated pedal.

In the article "Electronic Spindle Positioning — A Modern Solution to a Machine Tool Problem" there is disclosed a method of adjusting a tool spindle to an exactly definable angle position as soon as possible whereto — besides the tachogenerator fitted to the spindle is provided which produces several of hundred pulses per revolution of the spindle can be adjusted to an angle which can be precisely given. There is shown a circuit arrangement which is serving for controlling the drive such that the actuation of the requested position can be performed with the highest possible speed in several phases.

In DE 33 06 555 A1 there is disclosed a control means for a machine tool where the rotational speed of the motor and of the spindle is respectively detected by means of a tachogenerator. In order to take the respectively different moment of inertia of the rotating parts into consideration in the regulation, the gear ratio is formed by division of the pulses from the two tachogenerators, the divided signal being coupled to a multiplier serving as a regulator.

It is the object of the present invention to improve a sewing machine according to the preamble of claim 1 in such a way that mass production is easier and that the armshaft speed is always precisely kept.

This object is achieved by the advantageous measures indicated in the characterizing portion of claim 1.

Hence according to the invention, there are provided ratio detector means providing a count of the speed related pulses present during the interval between successive ones of the position pulses as a representation of a dimension of the armshaft pulley, for deriving a ratio value between the count and a value representative of a dimension of the motor pulley and for applying this ratio value to the multiplying means as multiplying factor for the multiplying means of the reference speed. By these advantageous measures it is ensured that the armshaft speed must not be calibrated depending on the respective diameters of the pulleys, so that no time is waisted in mass production of sewing machines even of different types. In addition, slippage of the transmission belt is automatically compensated, resulting in an armshaft speed which is always constant.

The present invention will be described in further detail with reference to the accompanying drawings, in which:

Fig. 1 is a block diagram of a sewing machine according to the present invention;

Fig. 2 is a block diagram illustrating the detail of the ratio detector of Fig. 1;

Figs. 3A and 3B are flowcharts of instructions performed by the microprocessor of Fig. 2, describing respectively a power-on interrupt routine for deriving an initial ratio value and a needle position interrupt routine for deriving a pulley diameter ratio;

Fig. 4 is a timing diagram associated with the flowcharts of Figs. 3A and 3B;

Figs. 5A and 5V are flow charts describing tachogenerator interrupt and timer interrupt routines for deriving an incremental initial ratio;

Fig. 6 is a timing diagram associated with Figs. 5A and 5B;

Fig. 7 is a flowchart describing an alternative program for deriving an incremental initial ratio; and

Fig. 8 is a timing diagram associated with Fig. 7.

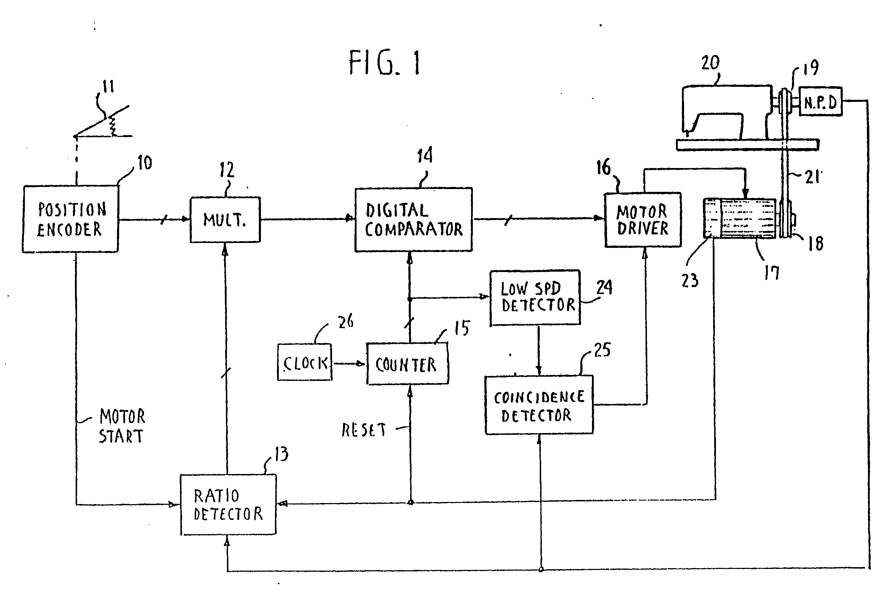

Referring not to Fig. 1, there is shown a sewing machine according to a preferred embodiment of the present invention. The sewing machine comprises an armshaft 20 driven by an armshaft pulley 19, an AC motor 17 for driving a motor pulley 18 coupled to the armshaft pulley 19 by a belt 21. A needle position detector 22 is coupled to the armshaft pulley 19 to generate a needle position pulse when the needle is at an upward position. A tachogenerator 23 is coupled to the motor 17 to supply speed-related pulses to a period counter 15 and a ratio detector 13. The period counter 15 counts clock pulses supplied from clock 26 in response to reset pulses from the tachogenerator 23 and generates a binary count representing the number of clock pulses present during the interval between successive reset pulses. The output of the counter 15 is applied to a digital comparator 14 as an indication of the actual speed of the motor 17. A speed setting device comprises a foot pedal 11 and a position encoder 10 which is coupled to the pivot of the pedal to generate a digital speed setting signal in accordance with the amount of depression of foot pedal 11, the speed setting signal being applied to a digital multiplier 12 where it is with a correcting factor supplied from a ratio detector 13 whose function will be described later. The output of multiplier 12 is supplied to the digital comparator 14 for comparison with the output of period counter 15. The digital comparator 14 generates an output indicating the magnitude and direction of deviation of the actual motor speed with respect to the reference speed, the comparator output being fed to a motor driver 16 where it is converted to an analog motor control signal and fed to the motor 17. The speed of the motor 17 is thus controlled in a closed loop to the reference speed established by the foot pedal 11.

A low-speed detector 24 is connected to the output of the counter 15 to detect when the actual motor speed is lower than a value appropriate for thread cutting operation. The output of low-speed detector 24 is applied to a coincidence detector 25 to which the needle position pulse is also applied. The coincidence detector 25 develops an output when the needle-up position is detected at low sewing speeds, the coincidence output being applied to motor driver 16 to decelerate the motor.

As will be described later, the ratio detector 13 counts tachogenerator output pulses that occur during the interval between successive needle position signals as a representation of the diameter of the armshaft pulley 19 and divides the count by a factor which is proportional to the diameter of the motor pulley 18 and is represented by the number of pulses generated during a full revolution of the motor 17. The output of the ratio detector 13 represents the ratio of the diameter of the armshaft pulley 19 to the diameter of the motor pulley 18 and is applied to the multiplier 12 to correct the reference speed with the pulley diameter ratio. Thus, sewing machine speed is automatically controlled to desired speed by compensating for differences in size beween different armshaft pulleys.

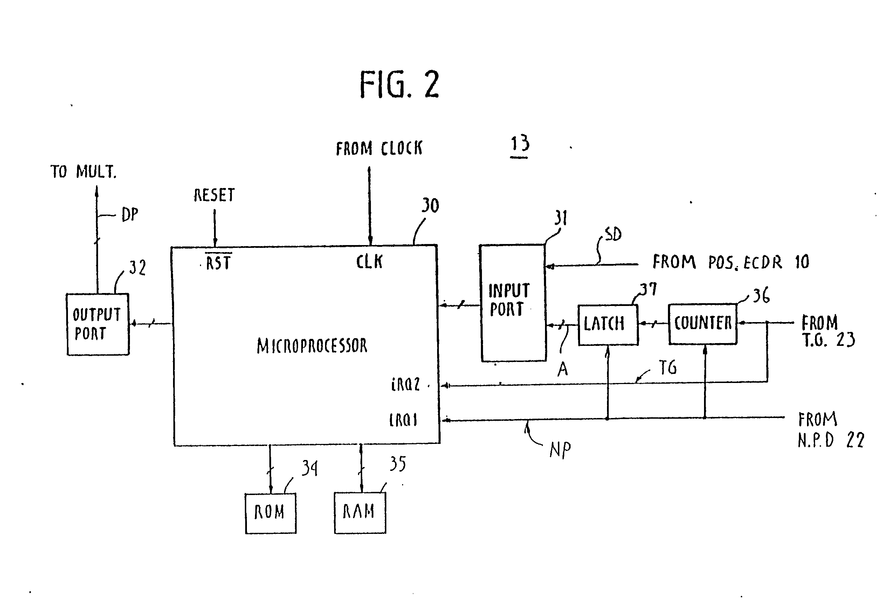

As shown in Fig. 2, the ratio detector 13 comprises a microprocessor 30, a counter 36 and a latch 37. Counter 33 is connected to the output of the tachogenerator 23 to initiate counting tachogenerator output pulses in response to a needle position signal from the detector 22. A binary output of the counter 36 indicates the number of speed related pulses generated during the interval of a full revolution of the armshaft pulley 19, the counter output being transferred to the latch 37 in response to the needle position signal. The count value stored in latch 37 is applied through an input port 31 to the microprocessor 30. The outputs of the needle position detector 22 and the tachogenerator 23 are applied to interrupt terminals iRQ1 and iRQ2 of the microprocessor, 30 respectively, to cause it to execute interrupt routines. A read-only memory 34 stores a dividing factor, i.e., the number of pulses generated by the tachogenerator 23 during full revolution of the motor shaft pulley 18 and an initial value ratio $DP_1$.

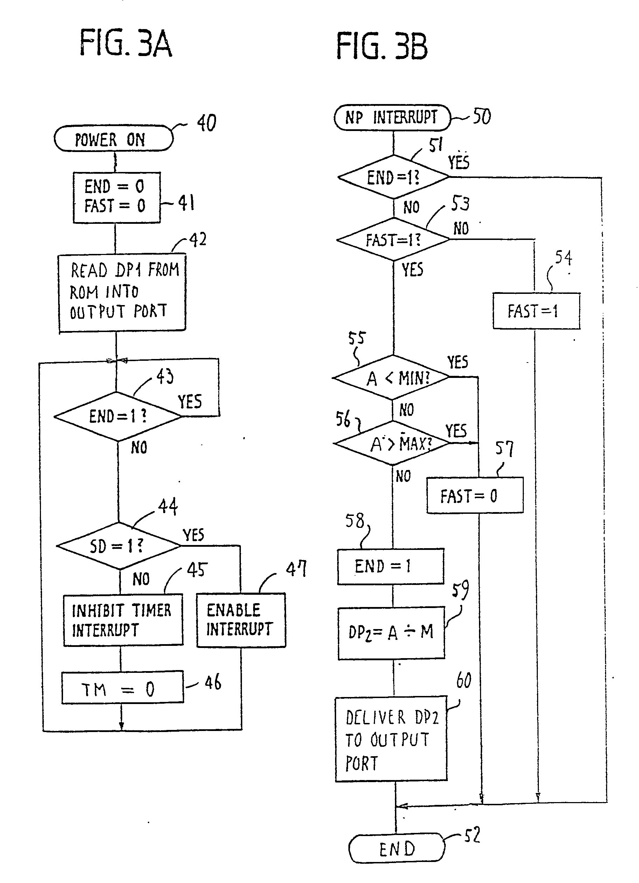

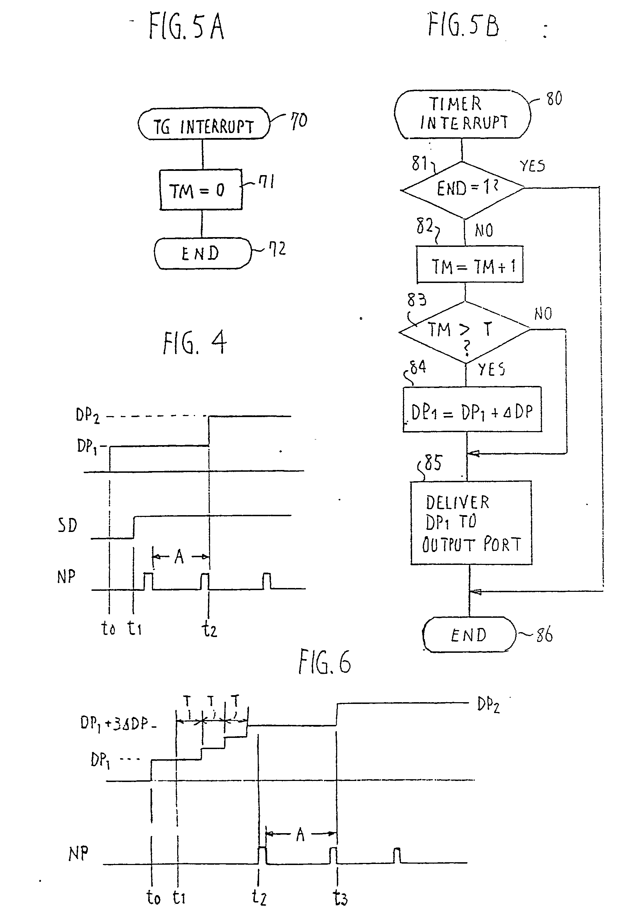

Figs. 3A and 3B are illustrations of a program describing the instructions stored in the ROM 34 according to an embodiment of the invention. In Fig. 3A, block 40 turns on the sewing machine in response to the pressing of an "ON" button at time $t_0$ (see Fig. 4). This calls for the step of initialization block 41, which resets "END" and "FAST" flags to zero. The next step in the program is indicated by block 42 which directs the reading of an initial value of ratio $DP_1$ from RAM 35 into the output port 32. Control exists to block 43 to check to see is the END flag has been set to "1". If the answer is affirmative, decision block 43 is repeated, and if the answer is negative, exit is to decision block 44 which tests for the presence of a motor start signal SD. This start signal is generated at time $t_1$ by the speed setting device 10 when the foot pedal 11 is depressed to a predetermined forward position. Therefore, if the start signal SD is not present after the sewing machine has been turned on, the decision at block 44 causes control to exit to operations block 45 which directs the disabling of timer interrupt. Following the execution of block 45, block 46 directs the resetting of the timer TM to zero. After execution of block 46, control jumps to block 43 to repeat the process. If the start signal is present, the exit from decision block 44 is to operations block 47 which directs the enablement of interrupt routines.

With the initial value being loaded into the output port 32, the foot pedal 11 is returned to a speed indicating position which is translated by speed setting device 10 into a digital value and fed to the multiplier 12 where it is modulated with the initial value $DP_1$. Since the tachogenerator 23 generates no output pulses at this movement, the output of the counter 15 assumes a large value. As a result, the comparison at the digital comparator 14 results in an output signal which gives a sufficient amount of torque for starting the motor 17. With the motor 17 being starting, the needle position detector 22 starts generating a needle position pulse Np which is applied to the interrupt command terminal iRQ1.

As illustrated in Fig. 3B, a needle position interrupt starts with block 50 which calls for block 51 which tests for the presence of an END=1 flag indicating the end of the needle position interrupt routine. If there is one, control returns to end-of-interrupt block 52. If there is none, the exit is to decision block 53 which tests for the presence of a FAST=1 flag indicating the generation of the first needle position pulse NP. Therefore, during the initial period of sewing operation, the microprocessor 30 responds to a needle position pulse NP of the first occurrence by causing the program to exit for decision block 53 to operations block 54 which directs the setting of the FAST flag to "1" and to return to block 52. Thus, the generation of a needle position pulse NP of the second occurrence at time $t_2$ causes control to exit from the decision block 53 to decision block 55.

The generation of two successive needle position pulses NP indicates that the armshaft pulley 19 has completed a full revolution. Meanwhile, the counter 36 counts speed-related pulses from the tachogenerator 23 that occur during the interval between the two successive needle position pulses NP just mentioned to produce a count "A" representing the diameter of the armshaft pulley 19, the count "A" being stored in the latch 37 and read out through the input port 31 into the microprocessor 30 for comparison with a minimum allowable value MIN. The decision block 55 provides this comparison. If the armshaft count is smaller than the minimum value, it is dismissed as invalid and control exits to operations block 57 which directs the resetting of the FAST flag to zero to repeat the needle position interrupt routine. If the armshaft count is greater than the minimum value, the exit is to decision block 56 which tests for the presence of an armshaft count greater than a maximum alowable value MAX. if there is one, the exit is to the block 57 to reset the FAST flag, and if there is one, the armshaft count is acceptable and control exits to operations block 58 which directs the setting of END flag to "1" indicating that a needle position interrupt routine has been accomplished. Control now exits to operations block 59 which directs the arithmetic division of the armshaft count value "A" by a constant "M" representing the number of speed-related pulses generated by the tachogenerator 23 during a full rotation of the motor pulley 18 to derive a ratio $DP_2$ of the armshaft pulley diameter to the motor pulley diameter. The exit then is to operations block 60 which delivers the ratio $DP_2$ to output port 32 to update the initial ratio $DP_1$.

During subsequent sewing operations, the pulley diameter ratio $DP_2$ is used by the multiplier 12 as a multiplying factor. As a result, differences in armshaft pulley diameter between different sewing machines are automatically compensated for by the multiplier 12. Thus, for a given amount of foot pedal depression, the speed of different sewing machines can be made to correspond to the desired setting regardless of the different sizes of the individual armshaft pulleys.

An appropriate value for the initial ratio $DP_1$ is in the range between 1/3 and 1/4. However, if the initial ratio $DP_1$ is too small for a sewing machine due to the unknown pulley diameter ratio, it takes longer for the motor 17 to reach desired speed. This can be overcome by periodically incrementing the initial ratio $DP_1$. Figs. 5A and 5B are flowcharts for incremental setting of the initial ratio $DP_1$. In Fig. 5A, block 70 initiates a tachogenerator interrupt routine in response to the receipt of an output pulse from the tachogenerator 23 at interrupt terminal iRQ2. This tachogenerator interrupt calls for block 71 which directs the resetting of a timer TM and block 72 which terminates the tachogenerator interrupt. In Fig. 5B, block 80 initiates a timer interrupt routine which calls for decision block 81 which tests for the presence of an END=1 flag indicating the end of the needle position interrupt routine mentioned previously. If there is one, control exits to block 86 to terminate the timer interrupt routine; if there is none, the exit is to operations block 82 which causes the timer to increment by one. Exit then is to decision block 83 which checks to see if the timer count value TM exceeds a predetermined value T. If the answer is negative, the exit is to operations block 85 and if it is affirmative, control proceeds to operations block 84 which directs the addition of an incremental value ΔDP to the initial value $DP_1$ which was obtained at time $t_0$ (see Fig. 6) by the power-on routine 40 (Fig. 3A). Exit then is to operations block 85 which delivers the incremented initial ratio $DP_1$ to the output port 32. The above process will be repeated if the motor speed is very low, and the initial value $DP_1$ may be incremented by 3ΔDP for three consecutive intervals T beginning at time $t_1$ as illustrated in Fig. 6. If the motor 17 has gained a sufficient speed with the initial ratio equal to $DP_1 + 3$ΔDP, a needle position interrupt routine 50 (Fig. 3B) will be initiated at time $t_2$ to derive the pulley diameter ratio $DP_2$ at time $t_3$.

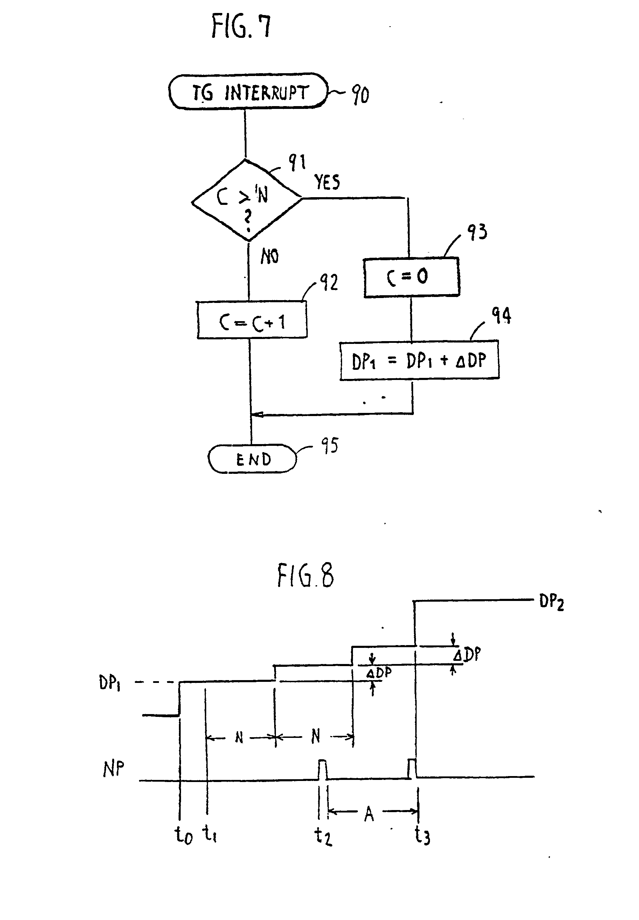

Fig. 7 is an illustration of an alternative flowchart for deriving the initial ratio with periodic increments. A tachogenerator interrupt routine 90 occurs when the motor 12 attains a speed of very low value and call for decision block 91 to test to see if the count value C of a counter in the microprocessor 30 has exceeded a predetermined value N. If the answer is negative, control exits to operations block 92 to increment the count value C by one, terminating the routine at block 95. If the answer is affirmative, the exit is to operations block 93 which directs the resetting of the count value C to zero. Exit then is to operations block 94 which directs the addition of an incremental value ΔDP to the initial ratio $DP_1$ which was derived at time $t_0$ by power-on routine 40 (Fig. 8). block 92 is thus repeated until the count C reaches N. Thus, the initial value $DP_1$ may be incremented by 2ΔDP

for two successive intervals N beginning at time $t_1$ (at which the tachogenerator interrupt route 90 is initiated) as shown in Fig. 8 and a first needle position pulse NP may occur at time $t_2$ and the armshaft pulley diameter count "A" is derived at time $t_3$ at which the needle position interrupt routine 80 is initiated to derive a pulley diameter ratio $DP_2$.

## Claims

1. A sewing machine, comprising a manually operated pedal (11), a motor (17) having a motor pulley (18) and an armshaft pulley (19) coupled to said motor pulley (18) by a belt (21), means (10) for establishing a reference speed value in accordance with the amount of depression of said pedal (11), multiplying said reference speed value by a multiplying factor, a tachogenerator (23) for generating speed related pulses at a rate proportional to the speed of rotation of said motor pulley (18), speed control means (14, 16) responsive to said speed related pulses for deriving an actual speed value representative of the actual speed of said motor (17) and responsive to the multiplied reference speed value for controlling the speed of said motor (17) in accordance with the difference between said actual speed value and said multiplied reference speed value, and an angular position detector (NPD) for generating a position pulse in responce to a predetermined position of said armshaft pulley (19), characterized by ratio detector means (13) for providing a count of said speed related pulses present during the interval between successive ones of said position pulses which are indicative of one revolution of said armshaft pulley (19), for deriving a ratio value between said count and a value representative of a dimension of said motor pulley (18) and for applying said ratio value to said multiplying means (12) as said multiplying factor.

2. A sewing machine according to claim 1, wherein said ratio detector means (13) comprises means for generating an initial ratio value prior to the application of the first mentioned ratio value and applying said initial ratio value to said multiplying means (12) as said multiplying factor.

3. A sewing machine according to claim 2, wherein said initial ratio is incremented by a predetermined amnount at intervals.

4. A sewing machine according to claim 3, wherein said intervals correspond to a predetermined count value of said speed related pulses.

5. A sewing machine according to claims 2 to 4, wherein said ratio detector means (13) disables said count when it is outside of the limits of an allowable range and provides a second count of said speed related pulses to generate said ratio value.

## Patentansprüche

1. Nähmaschine mit einem Fußpedal (11), einem Motor (17) mit einer Motor-Riemenscheibe (18) und einer über einen Riemen (21) mit der Motor-Riemenscheibe (18) gekoppelten Armwellen-Riemenscheibe (19), einer Einrichtung (10) zum Festlegen eines Bezugsdrehzahlwerts entsprechend dem Ausmaß des Niederdrückens des Fußpedals (11), einer Einrichtung (12) zum Multiplizieren des Bezugsdrehzahlwerts mit einem Multiplikator, einem Drehzahlgeber (23) zum Erzeugen von drehzahlbezogenen Impulsen in einem zur Drehzahl der Motor-Riemenscheibe (18) proportionalen Takt, einer Drehzahlregeleinrichtung (14, 16), die auf die drehzahlbezogenen Impulse durch Ableiten eines die Ist-Drehzahl des Motors (17) darstellenden Ist-Drehzahlwerts und auf den multiplizierten Bezugsdrehzahlwert durch Regeln der Drehzahl des Motors (17) entsprechend einer Differenz zwischen dem Ist-Drehzahlwert und dem multiplizierten Bezugsdrehzahlwert anspricht, und einem Winkelstellungsdetektor (NPD) zum Erzeugen eines Stellungsimpulses entsprechend einer vorbestimmten Stellung der Armwellen-Riemenscheibe (19), gekennzeichnet durch eine Verhältnisdetektoreinrichtung (13) zum Bilden eines Zählwerts der drehzahlbezogenen Impulse, die während des Intervalls zwischen aufeinanderfolgenden einzelnen Stellungsimpulsen auftreten, welche eine einzelne Umdrehung der Armwellen-Riemenscheibe (19) anzeigen, zum Ableiten eines Verhältniswerts für das Verhältnis zwischen dem Zählwert und einem eine Abmessung der Motor-Riemenscheibe (18) darstellenden Wert und zum Anlegen des Verhältnis werts an die Multipliziereinrichtung (12) als Multiplikator.

2. Nähmaschine nach Anspruch 1, in der die Verhältnisdetektoreinrichtung (13) eine Einrichtung zum Erzeugen eines Anfangs-Verhältniswerts vor dem Anlegen des erstgenannten Verhältniswerts und zum Anlegen des Anfangs-Verhältniswerts an die Multipliziereinrichtung (12) als Multiplikator aufweist.

3. Nähmaschine nach Anspruch 2, in der der Anfangs-Verhältniswert in Intervallen um eine vorbestimmte Größe erhöht wird.

4. Nähmaschine nach Anspruch 3, in der die Intervalle einem vorbestimmten Zählwert der drehzahlbezogenen Impulse entsprechen.

5. Nähmaschine nach Anspruch 2 bis 4, in der die Verhältnisdetektoreinrichtung (13) den Zählwert annulliert, wenn er außerhalb der Grenzen eines zulässigen Bereichs liegt, und einen zweiten Zählwert der drehzahlbezogenen impulse bildet, um den Verhältniswert zu erzeugen.

## Revendications

1. Machine à coudre, comportant une pédale (11) actionnée manuellement, un moteur (17) ayant une poulie (18) de moteur et une poulie (19) d'arbre secondaire couplée à ladite poulie (18) de moteur par une courroie (21), des moyens (10) pour établir une valeur de vitesse de référence en fonction de l'importance de la dépression de ladite pédale (11), pour multiplier ladite valeur de vitesse de référence par un facteur multiplicateur, un générateur (23) d'impulsions tachymétriques pour générer des impulsions en fonction de la vitesse à une vitesse proportionnelle à la vitesse de rotation de ladite poulie (18) de moteur, des moyens (14, 16) de commande de vitesse réagissant auxdites impulsions qui sont en fonction de la vitesse afin de dériver une valeur de vitesse réelle représentative de la vitesse réelle dudit moteur (17) et réagissant à la valeur de vitesse de référence multipliée de façon à commander la vitesse dudit moteur (17) en fonction d'une différence entre ladite valeur de vitesse réelle et ladite valeur de vitesse de référence multipliée, et un détecteur (NPD) de position angulaire pour générer une impulsion de position en réponse à une position prédéterminée de ladite poulie (19) d'arbre secondaire, caractérisée par des moyens (13) de détection de rapport pour procurer un décompte desdites impulsions qui sont en fonction de la vitesse, qui sont présentes durant l'intervalle entre des impulsions successives desdites impulsions de position qui sont indicatives d'une révolution de ladite poulie (19) d'arbre secondaire, pour dériver une valeur de rapport entre ledit décompte et une valeur représentative d'une dimension de ladite poulie (18) de moteur et pour appliquer ladite valeur de rapport auxdits moyens multiplicateurs (12) sous la forme dudit facteur multiplicateur.

2. Machine à coudre selon la revendication 1, dans laquelle lesdits moyens (13) formant détecteur de rapport comportent des moyens pour générer une valeur de rapport initiale avant l'application de la première valeur de rapport mentionnée et pour appliquer ladite valeur de rapport initiale auxdits moyens multiplacateurs (12) sous la forme dudit facteur multiplicateur.

3. Machine à coudre selon la revendication 2, dans laquelle ladite valeur de rapport initiale est incrémentée par intervalles d'une valeur prédéterminée.

4. Machine à coudre selon la revendication 3, dans lequelle lesdits intervalles correspondent à une valeur de décompte prédéterminée desdites impulsions qui sont en fonction de la vitesse.

5. Machine à coudre selon les revendications 2 à 4, dans laquelle lesdits moeyns (13) formant détecteur de rapport rendent invalide ledit décomompte lorsqu'il est en-dehors des limites d'une plage admissible et délivrent un deuxième décompte desdites impulsions qui sont en fonction de la vitesse pour générer ladite valeur de rapport.

# FIG. 1

EP 0 201 902 B1

# FIG. 2

TO MULT.

FROM CLOCK

<u>13</u>

RESET

DP

32

RST     CLK    30     31    SD

FROM POS. ECDR 10

OUTPUT PORT

INPUT PORT

37    36

LATCH    COUNTER

MICROPROCESSOR

FROM T.G. 23

A     TG

IRQ2

IRQ1

FROM N.P.D 22

NP

34    35

ROM    RAM

EP 0 201 902 B1

# FIG. 3A

POWER ON — 40

END = 0
FAST = 0 — 41

READ DP1 FROM
ROM INTO
OUTPUT PORT — 42

END = 1 ? — 43
YES →
NO ↓

SD = 1 ? — 44
YES →
NO ↓

INHIBIT TIMER
INTERRUPT — 45

ENABLE
INTERRUPT — 47

TM = 0 — 46

# FIG. 3B

NP INTERRUPT — 50

END = 1 ? — 51
YES →
NO ↓

FAST = 1 ? — 53
NO →
YES ↓

FAST = 1 — 54

A < MIN ? — 55
YES →
NO ↓

A > MAX ? — 56
YES →
NO ↓

FAST = 0 — 57

END = 1 — 58

$DP_2 = A \div M$ — 59

DELIVER DP2
TO OUTPUT
PORT — 60

END — 52

## FIG.5A

## FIG.5B

TG INTERRUPT — 70

TM = 0 — 71

END — 72

## FIG. 4

TIMER INTERRUPT — 80

81 END = 1? YES

82 NO

TM = TM + 1

83 TM > T ? NO

84 YES

$DP_1 = DP_1 + \Delta DP$

85

DELIVER $DP_1$ TO OUTPUT PORT

END — 86

## FIG.6

FIG. 7

FIG. 8